# EUROPEAN PATENT APPLICATION

(11) **EP 3 301 978 A1**
(43) Date of publication of application: **04.04.2018**
(21) Application number: 16191057.5
(22) Date of filing: 28.09.2016
(51) Int. Cl.: H04W 48/12

(54) **TRANSMISSION OF SYSTEM INFORMATION MESSAGES ON DEMAND**

(71) Applicant: IPCom GmbH & Co. KG, 82049 Pullach (DE)
(72) Inventor: SCHMIDT, Andreas, 38124 Braunschweig (DE); BIENAS, Maik, 38170 Schöppenstedt (DE); HANS, Martin, 31162 Bad Salzdetfurth (DE)
(74) Representative: Tomlinson, Edward James

(57) **Abstract**

The present invention provides a method of providing on-demand system information to a user equipment device, UE, in a mobile communications network, the system information being transmitted by a base station by means of system information units, the method comprising the base station transmitting validity information indicating which system information units are currently valid; the UE transmitting to a base station a message indicating based on the validity information which system information units are required by the UE; and the base station transmitting the required system information units to the UE.

## Description

The present invention relates to the transmission of system information messages in a mobile communication system and in particular the transmission of system information messages to mobile terminals on demand.

In order for a mobile terminal (generally referred to as user equipment, UE) to access a cell for the first time, some cell (system) information has to be known by the UE. Therefore, a base station (in LTE referred to as an eNB) transmits on a regular, periodic schedule so called system information to all UEs in its coverage area or cell, i.e. the system information is broadcast.

LTE system information consists of a master information block (MIB) and a number of system information blocks (SIBs). The MIB is broadcast on the physical broadcast channel (PBCH), while SIBs are sent on the physical downlink shared channel (PDSCH) through radio resource control (RRC) messages. SIB1 is carried by a so-called "SystemInformationBlockType 1" message. SIB2 and other SIBs are carried by "SystemInformation (SI)" messages. An SI message can contain one or several SIBs. The MIB is the first thing a UE searches for after it achieves downlink synchronization. The MIB carries the most essential information that is needed for the UE to acquire other information from the cell. It includes:
i) The downlink channel bandwidth;
ii) The PHICH configuration - the Physical Hybrid ARQ Indicator Channel carries the HARQ ACKs and NACKs for uplink transmissions;
iii) The SFN (System Frame Number) which helps with synchronization and acts as a timing reference; and
iv) An antenna configuration transmitted by the eNB specifying the number of transmit antennas at the eNB such as 1, 2, or 4, which is carried by a CRC mask for the PBCH.

SIB1 is carried in a SystemInformationBlockType1 message. It includes information related to UE cell access and defines the schedules of other SIBs, such as:
i) The PLMN Identities of the network;
ii) The tracking area code (TAC) and cell ID;
iii)The cell barring status, to indicate if a UE may camp on the cell or not;
iv) q-RxLevMin, which indicates the minimum required Rx Level in the cell to fulfil the cell selection criteria; and
v) The transmissions times and periodicities of other SIBs.

SIB1 may be provided by the eNB also in dedicated signalling to the UE, e.g. in the *RRCConnectionReconfiguration* message. For UEs using the carrier aggregation feature of LTE the primary cell (PCell) provides system information for a secondary cell (SCell) via dedicated signalling.

SIB2 to SIB13 carry further system information relevant to all or a subset of UEs. The different SIBs are transmitted with different periodicity depending on the expected frequency of change. The SIB contents of LTE is provided in the table below just for information. This is described in 3GPP TS 36.331, § 5.2. The present invention relates to the transport of system information in general without reference to its contents.

| System info block name | | Transmission type and physical channel | Function description |
|---|---|---|---|
| MIB | | Broadcast on PBCH | limited number of most essential and most frequently transmitted parameters that are needed to acquire other information from the cell |
| SIB1 | | Broadcast on PDSCH | Cell access and cell reselection related info, scheduling info list |
| SI | SIB2 | | radio resource configuration that is common for all UEs |
| | SIB3 | | Cell reselection configuration |
| | SIB4 | | Intra-frequency neighboring cell list, black list |
| | SIB5 | | Inter-frequency neighboring cell list |
| | SIB6 | | Neighboring cell list for UTRAN |
| | SIB7 | | Neighboring cell list for GSM |
| | SIB8 | | Neighboring cell list for CDMA2000 |
| | SIB9 | | HeNB indicator |
| | SIB10 | | EWTS primary notification info |
| | SIB11 | | EWTS secondary notification info |
| | SIB12 | | CMAS notification |
| | SIB13 | | Control info for MBMS |
| | SIB14 | | EAB parameters |
| | SIB15 | | MBMS Service Area Identities |
| | SIB16 | | info related to GPS time and Coordinated Universal Time |
| | SIB17 | | info relevant for traffic steering between E-UTRAN and WLAN |
| | SIB18 | | Info and resource configuration for sidelink communication |
| | SIB19 | | Info and resource configuration for sidelink discovery |
| | SIB20 | | control info associated transmission of MBMS using SC-PTM |

System information is generally read in the following situations:
i) UE is powered on (selecting a cell)
ii) Cell re-selection
iii) After handover completion
iv) After entering E-UTRAN from another radio access technology
v) coming from an out of coverage situation
vi) receiving a notification that system information has changed
vii) receiving an indication about the presence of ETWS (Primary/Secondary), CMAS notification
viii) receiving a request from CDMA 2000 upper layers
ix) exceeding the maximum validity duration of SIBs

System information in transmitted periodically with information changes only occurring once in a modification period. A SIBn (n= 1...20) may be transmitted multiple times identically within a modification period but a change of any SIB occurs (if at all) only in the next modification period. Whether system information is updated, i.e. whether a SIB is different in the next modification period is indicated to UEs in the current modification period.

Information about a change is provided via paging messages that carry the *systemInfoModification* information. In addition, SIB1 contains a systemInfoValueTag that indicates whether system information has changed, e.g. for UEs returning from out of coverage which were not able to receive *systeminfoModification* via paging.

For each SIBn a transmission window can be calculated by the UE so that it has a given time period in which to expect the respective SIB. The UE will read the PDCCH (physical downlink control channel) for a system information RNTI (SI-RNTI) and receive the system information message in a further step on the PDSCH (physical downlink shared channel) if the RNTI is received. If not, the UE listens to the information again in the next transmission window.

Cellular mobile warning systems like Earthquake and Tsunami Warning System (ETWS) and Commercial Mobile Alert System (CMAS) in 3GPP use paging and system information to deliver warning messages that are received by capable UEs and alert the user immediately. The modification period may not apply to warning information and an immediate paging alert refers to warning messages available in system information.

In 3GPP currently a new radio interface is developed denoted "New Radio", commonly also known as 5^{th} Generation Radio, or 5G. It is a common understanding in the standardization community that in legacy systems, especially LTE, the transport of system information is not sufficiently efficient and 5G has to use more sophisticated mechanisms.

3GPP Tdoc R2-165201 provides a summary of current discussion in 3GPP work group RAN 2 responsible for specifying the system information delivery mechanism for new radio. The following aspects are mentioned in the document, where appropriate additional 3GPP Tdocs are referenced:
SI is divided into "minimum system information" and "other system information". The minimum SI is required for a UE to (initially) access the cell. This information will be broadcasted by the base station. Other SI may be broadcasted or send in a dedicated fashion to a UE.
Other SI may be requested by a UE or the network may initiate delivery, in both cases it is delivered on-demand. The on-demand submission is broadcast or unicast for the base station to decide (or fixed).
SI may be collected for several cells, e.g. when the information is identical for the cells, and send out via broadcast by only one cell. The information may be in form of a SI table (SIT) broadcasted rarely or sent in a dedicated fashion containing multiple configuration that are referenced by indices which are broadcasted frequently (R2-163743 and R2-163997).
SI may be delivered by an overlaid cell, jointly by several cells via Single Frequency Network (SFN) or by an overlaid LTE cell for New Radio small cells. (R2-163997)
SI may be provided out-of-band, i.e. in a frequency other than that of the cell, to which it applies (R2-164088)
SI may be requested after RRC Connection setup, during RRC Connection setup or with an enhanced random access without setting up an RRC Connection. The SI may be transmitted in a dedicated fashion or in broadcast mode. In case it is broadcasted, other UEs interested may receive the SI without sending a request themselves (R2-163371)
SI may be requested by a UE using a two-step approach: UE transmits an enhanced random access to indicate the need to receive additional (not broadcasted) SI. UE is provided with common (e.g. typical) SI information and with UL resource that can be used by the UE to request further SI if the common SI received are not sufficient. (R2-163371)

US 2016/0234736 A1 describes transmission of system information as broadcast (or broad beam) or unicast (or narrow beam) in a periodic way or on-demand. The network may have service specific system information available and inform a UE about whether system information is available on demand (as a result of a request for system information) or about the schedule of periodic system information for specific services. The respective schedule may be broadcasted in synchronization information. The system information may be provided incrementally, i.e. as master information (basic system access information) and non-master information (additional service specific information). The system may inform about when system information has changed and a UE may receive new system information only when it is changed or when the UE determines that it has moved in a new cell / zone. The system may also inform a UE about where system information is transmitted and where requests for on-demand system information is to be sent.

WO 2014/021610 A1 describes transmission of information about reception of system information by a UE, especially transmission of a capability of a UE to receive certain system information. Also described are means to request such transmission from a UE via broadcast or unicast, e.g. a UE capability enquiry message.

US 2013/089008 A1 describes a method including transmission of a random access request to a base station and in return transmission of system information to the terminal. The system information includes a base station identification and UL and DL resources to be used in further communication with the terminal.

US 8,189,522 describes a method to balance periodic broadcast, ad hoc (on demand) broadcast and unicast provision of system information, especially network service provider information. Depending on size of data, latency requirements and available resources the base station decides to provide system information in either way after receiving a request for system information from a UE.

US 2010/027466 A1 describes broadcasting of primary system information periodically while secondary system information is broadcast in response to a trigger event. The trigger event may comprise receipt of a request for secondary system information from user equipment (UE), which indicates that the secondary information is needed. Additionally, the request may indicate the group or type of system information that is needed, e.g. system information for call setup.

US 9,204,373 describes a call re-establishment procedure, especially for GSM, where after Radio Link Failure a new cell is selected, system information is read and a request for call re-establishment is transmitted to the base station. The method comprises a terminal to transmit a request for neighbour cell system information and in response receive this information from the base station. The request may or may not contain one or more specific neighbour cells and if not, the response may contain information about all neighbour cells. Another aspect of system information is transmitting a "no change" message by the base station to indicate there is no change to previously transmitted neighbour cell system information. Transmitting a validity period with system information. and the transmission of an indication from the base station to the terminal about support of transmitting on-demand system information are also described.

US 2006/0007877 A1 describes transmitting a part of system information automatically or periodically, e.g. in one mode of operation, and another part in another mode or on request by a terminal. It is also described that system information provision by the network is accompanied by change marks that allow receivers to check validity of stored system information and only receive or request further (updated) information if necessary. System information may also be requested by a terminal and sent on request by the base station, especially a minimum set of system information may be obtained automatically or periodically while a further part of system information is transmitted on request.

With regard to terminology used in this document, the following is to be noted. System information (SI) may be required, stored and delivered in separate units, called in legacy cellular systems SI blocks (SIBs). This term "block" (SIB) is used when referencing to any parts of the SI of a network, a sub-network or a cell. The partitioning of SI into blocks can be based on any property of the SI, e.g. related to its delivery or to its meaning or anything else. While in the following, the term SIB is used, this should not be interpreted to mean that the invention is limited to system information having a format and the use of the term SIB is simply a means of referring to a unit of system information.

A mobile device is called a user equipment (UE) in UMTS and LTE and a mobile station (MS) in GSM. No name for a mobile device has been given in 5G. Herein, the term UE includes within its scope any such mobile device or station. The usage of UE is intended to convey its broadest meaning including mobile phones, smart phones, wearables, modems deployed in vehicles, utility meters, sensors/actuators and other small machines as well as larger machines like vendor machines connected to the mobile network. This includes also devices accessing the network via fixed access, e.g. via DSL or via a WLAN access point connected via fixed line.

There is a known need to develop a new way of delivering system information to mobile device. Legacy broadcasting delivery mechanisms are insufficient with regards to radio resource and energy efficiency of delivering SI, energy efficiency of receiving SI and flexibility for heterogeneous networks.

To date, there is no document which describes a system or method for providing on-demand system information in a cellular mobile communication network in an efficient way ensuring a limited number of requests for system information even if the number of devices is high. The documents referred to above do not detail how to reduce the delay of requests for on-demand system information delivery ensuring at the same time the number of devices sending such requests is limited so that resource demands for transmission of the requests do not exceed an acceptable limit.

The present invention provides a method of providing on-demand system information to a user equipment device, UE, in a mobile communications network, the system information being transmitted by a base station by means of system information units, the method comprising the base station transmitting validity information indicating which system information units are currently valid; the UE transmitting to a base station a message indicating based on the validity information which system information units are required by the UE; and the base station transmitting the required system information units to the UE.

In a further aspect, the invention provides a user equipment device, UE, arranged to transmit information to and receive information from a mobile communications base station, wherein the UE is adapted to store system information units transmitted by the base station, to transmit to the base station a request for the base station to transmit version information indicating which versions of system information units are currently valid; and based on the version information to transmit a request to the base station that particular system information units be transmitted by the base station.

By means of the invention, a system and method for providing an efficient on-demand delivery system are obtained.

Further aspects of the invention include:

### Aspect 1

A UE that has SIBs stored may have a version number of a SIB delivered together with the SIB from the network and stored in the UE. Also, an expiry time or validity period may be known, e.g. as a fixed time pre-defined for each SIB type or as multiple / all SIBs or delivered and stored together with the actual SIB.

Based on the expiry time, the UE may request a version table (VT) from the base station which may contain current version information for each SIB. The UE may indicate in the request specific SIBs it has stored, so that the VT can be adapted. The UE can also send a VT containing the currently stored versions of SIBs to the base station and request an indication whether or not SIBs have been updated and if so, which ones.

The VT may be transmitted by the network in a broadcast manner so that other UEs interested can receive the table without sending a request themselves. It may also be transmitted in a dedicated fashion, e.g. to increase transmission efficiency.

UEs receiving the VT with an indication for some or all of the stored SIBs that these SIBs are up-to-date, i.e. the current version matches the stored version, will reset the expiry timer of the respective SIB or SIBs and will consider the SIBs as up-to-date until the timer expires again. The VT may also include different timer values to be applied to the SIBs, i.e. if the SIBs are expected to be updated after a longer or shorter period than before.

The base station may also adapt the contents of the VT to the actual UE initiating the request. For example, the UE may provide its identity in a request for SI. The network may look-up the UEs capabilities or the currently configured services and provide a version table only for those SIBs that the UE requires based on its capabilities, services or both. In general, a given UE may be provisioned with an individual set of SIBs that are tailored to the respective UE's current situation or needs, for example based on device capabilities, service characteristics, network policies and/or subscriber settings.

Also, the base station may transmit together with the VT some SI that the base station expects to require an update in the UE, i.e. because the respective SIBs have been recently updated and the UE is not expected to have received those updates yet. The VT would then only contain version information for SIBs not contained in the respective delivery (message or messages).

### Aspect 2

Based on a VT the UE may request updated SIBs from the base station. Again the delivery of the SIBs by the base station may be done in a broadcast fashion to allow other UEs to receive the information without placing a request. The delivery may also be done in a dedicated way to increase transmission efficiency.

### Aspect 3

UEs receiving the new version of the SIBs will store the SIBs and version numbers thereby overwriting already stored respective SIBs and versions and reset the expiry timer.

UEs may not wait for the respective expiry timer to expire but start listening to potential broadcast transmissions of VTs or actual SIBs before the timer expires. The UEs could then profit from transmissions triggered by other UE's requests or by network triggered transmissions. When the timer expires, however, the UEs will have to place a request to ensure up-to-date system information is available.

Broadcast delivery of SIBs received and stored by several UEs at the same time will naturally result in the expiry timer to expire at the same time for all these UEs. To prevent all UEs from sending requests for VTs or updated SI at the same time the UE may delay the transmission of requests randomly during a certain time period before the timer actually expires (or after the expiry of the timer if it is set accordingly taking the resulting delay into account).

The network may be free to broadcast VTs or SIBs at any time. Thus, a high number of UEs requesting SIB updates are consequently expected to request the same SIBs or VTs again after expiry of their validity timer. This may cause the base station to broadcast the respective SIBs and/or VTs without any request from UEs at a period where UEs are expected to listen to the SIB broadcast without already sending request messages. As a result, we define states and respective UE behaviour for a single SIB or multiple/all SIBs a UE has stored.

### Aspect 4

The usage of VTs and length of the timers may be a system information itself, delivered to UEs and adapted as appropriate.

### Aspect 5

UEs connecting to the network for other reasons than SI delivery, e.g. tracking area updates or data transmission, may request version tables even though a SI expiry timer did not expire, just to make use of the connection that is set up. This usage may also be initiated by the network, e.g. based on recent changes of SIBs and the expectation that these will be updated soon.

As above, the UE in that case may also send a version table itself and receive an indication of up-to-date and to-be-updated SIBs including the actual SIBs. In that case it may be preferable to keep UEs synchronized with regard to the reception of SI to maximize the ratio of UEs receiving SIBs to UEs requesting SIB-transmission. To achieve that, the expiry time may be set individually by the network. The result may be that even UEs receiving SIB updates unsynchronized, e.g. within a period where other UEs are not prepared to receive SIB updates of VT information, will have a validity expiration synchronized with the other UEs, i.e. the end of the second next SIB reception period is shared with a larger group of UEs.

An alternative solution that may be combined with the solutions above is based on a base station that stores the system information delivered to a UE in a UE-specific context. The UE only has to request SI that it never received from the base station or that it has lost.

### Aspect 6

As long as the UE is within coverage of the base station which delivered the system information at least once it relies on the base station to send updates of the system information as required (on-demand). The transmission may again be broadcast or unicast, whichever the base station determines to be more efficient for a specific delivery attempt.

The delivery requires an acknowledgement by the UE to ensure successful storage in the UE, so either a dedicated delivery or a broadcast with individual feedback is required. The base station only rarely receives SI requests from UEs which is a great advantage.

In this case, if a UE leaves one (source) cell and enters another (target) cell, it has to read the SI of that target cell. It may request provision of SI indicating the source base station that stores the UE context. The target base station, if connected to the source base station (e.g., via an interface such as the X1 interface in LTE), may fetch the context and provide the UE only with differential SI, indicating identical SI otherwise. Then the target base station can continue to provide SI on-demand.

This is especially advantageous for networks where neighbour base stations provide widely identical SI, so that in case a cell re-selection from source to target base station took place still the majority of stored SI is valid and does not need to be updated.

It would also be possible for one cell to deliver SI providing the information which SIBs are identical in specified neighbour cells. With that knowledge the UE can use the respective SIB without requesting an update from the target cell.

In case that no former cell is indicated by a UE entering a cell or no context can be fetched from that former cell the new base station will provide a full set of relevant system information as described above.

Preferred embodiments of the invention will now be described, by way of example only, with reference to the accompanying drawings in which:
Fig. 1 shows a state diagram for a UE receiving system information;
Fig. 2 is a message sequence chart showing communications between a UE and a base station when the UE enters a cell;
Fig. 3 is a time chart showing transmission and reception of information by a base station and a plurality of UEs;
Fig. 4 is a message sequence chart where two UEs have stored the same SIB;
Fig. 5 shows a further message sequence chart for when a UE enters a cell; and
Fig. 6 illustrates a possible SIB information field.

In a first embodiment, the first and second aspects of the invention described above are implemented.

In this exemplary arrangement, a version number of a SIB is delivered together with the SIB from the network and stored in the UE. Also, an expiry time or validity period may be known, e.g. as a fixed time pre-defined for each SIB type or as multiple / all SIBs or delivered and stored together with the actual SIB.

Based on the expiry time, the UE requests a version table (VT) from the base station which may contain current version information for each SIB. The UE may indicate in the request specific SIBs it has stored, so that the VT can be adapted. The UE can also send a VT containing the currently stored versions of SIBs to the base station and request an indication whether or not SIBs have been updated and if so, which ones.

The VT may be transmitted by the network in a broadcast manner so that other UEs interested can receive the table without sending a request themselves. It may also be transmitted in a dedicated fashion, e.g. to increase transmission efficiency.

UEs receiving the VT with an indication for some or all of the stored SIBs that these SIBs are up-to-date, i.e. the current version matches the stored version, will reset the expiry timer of the respective SIB or SIBs and will consider the SIBs as up-to-date until the timer expires again. The VT may also include different timer values to be applied to the SIBs, i.e. if the SIBs are expected to be updated after a longer or shorter period than before.

The base station may also adapt the contents of the VT to the actual UE initiating the request. For example, the UE may provide its identity in a request for SI. The network may look-up the UEs capabilities or the currently configured services and provide a version table only for those SIBs that the UE requires based on its capabilities, services or both. In general, a given UE may be provisioned with an individual set of SIBs that are tailored to the respective UE's current situation or needs, for example based on device capabilities, service characteristics, network policies and/or subscriber settings.

Also, the base station may transmit together with the VT some SI that the base station expects to require an update in the UE, i.e. because the respective SIBs have been recently updated and the UE is not expected to have received those updates yet. The VT would then only contain version information for SIBs not contained in the respective delivery (message or messages).

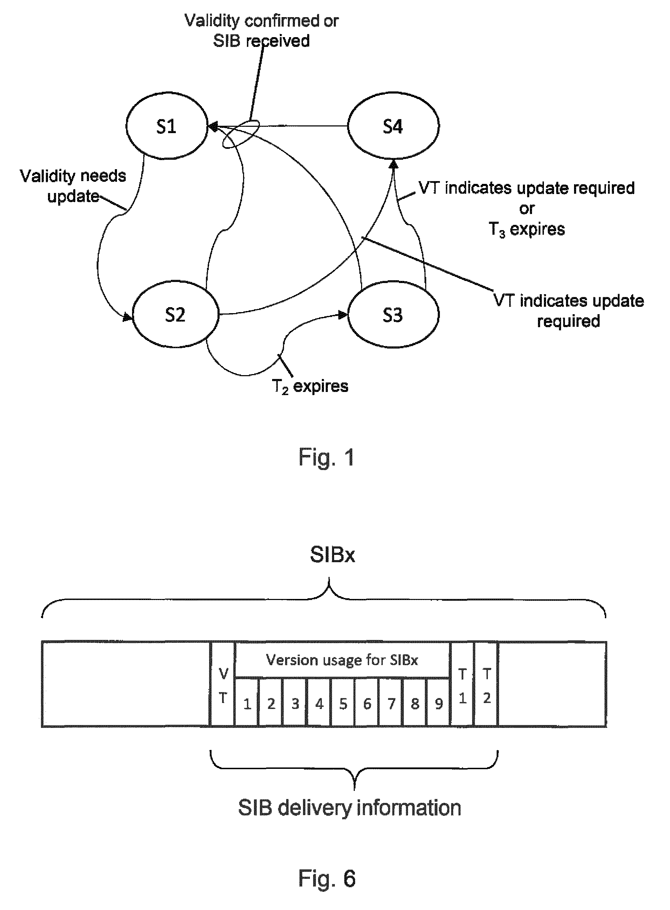

Fig. 1 shows an exemplary state diagram for a single SIB. The state diagram may also be applicable to multiple or all SIBs.

In a state S₁ a SIB is valid and no updates are needed, thus no listening for SI or VT by the UE is foreseen. In state S₂ the UE is able to receive (or listen to) respective SIB or VT transmissions. In state S₃ the UE is able to receive (or listen to) respective SIB or VT transmissions and the UE actively requests VT transmissions on a (randomly) delayed basis. In state S₄ the UE is able to receive (or listen to) respective SIB or VT transmissions and the UE actively requests SIB transmissions on a (randomly) delayed basis.

The state S₁ is entered once a SIB has been received or its validity is re-confirmed.

A time T₁ after S₁ has been entered which may be a certain time period before a SIB validity expires, the UE may change to S₂. In that state and in any of S₃ and S₄ as well, the UE enables the network to send to the UE VTs or SIBs and thus prevent the UE from sending requests. If a received VT re-confirms the validity of the SIB or the actual SIB is received anew, the UE changes back to state S₁.

If after a timer T₂ neither the SIB nor a VT regarding the SIB are received in state S₂, the UE changes to S₃. If a VT is received that indicates the SIB needs an update, the UE changes to S₄.

In S₃ whenever the SIB or a VT confirming validity is received, the UE changes to S₁. If a VT is received that indicates the SIB needs an update, the UE changes to S₄. Otherwise it sends a delayed request for VT and depending on the received VT, it changes to S₁ (if SIB validity is re-confirmed) or S₄ as stated above. The delay may be randomly chosen, however a maximum delay of T₃ may ensure a timely update of SI. If with the time T₃ no VT or SIB has been received, the UE may change to S₄ to ensure a SIB is requested in due time.

In S₄, whenever the SIB is received, the UE changes to S₁. Otherwise it sends a delayed request for delivery of the SIB. Again, the delay may be randomly chosen, however a maximum delay of T₄ may ensure a timely update of SI.

The description above is written for a single SIB being updated using the state machine. Multiple SIBs would thus have multiple such state machines. Alternatively, a group of SIBs, e.g. the SIBs having same validation timers or all SIBs may share a common state so that e.g. S₃ and S₄ are entered if at least for one SIB version information is missing or at least one SIB requires an update, respectively.

For networks not using version information (VTs), the state S₃ may not exist and changes are directly from S₂ to S₄.

The random base in S₃ and S₄ could be uniformly distributed over the respective periods or the likelihood for transmission of a request being sent by the UE increases throughout the period so that a request is ensured to be transmitted around the end of the period.

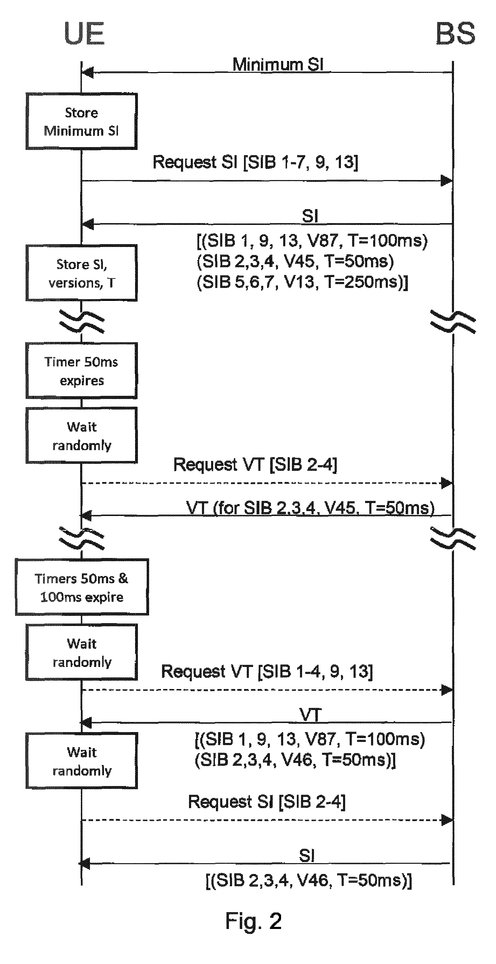

Fig. 2 depicts a message sequence chart of an example of a UE entering a cell.

The UE receives minimum SI required to access the cell. As the UE does not have stored any SI of the cell it requests SI according to the features it is capable of using. In this arbitrary example these are SIB 1-7, SIB 9 and SIB 13. The base station replies by transmitting the requesting SIBs together with version information and respective validity timers applicable for each group of SI. The information is stored.

When a timer expires, in the example the 50ms timer of SIBs 2, 3 and 4 expire, the UE prepares to transmit a request for a validity table. The transmission is randomly delayed and only finally performed if the version table has not already been received before transmission of the request (therefore shown with dashed lines). In this example, the version table received from the base station indicates the version number of the already stored SI, so no update is required, validity is re-confirmed and the validity timer for SIBs 2, 3 and 4 is reset. The validity time is kept to be 50ms.

When the next timer expires 100ms after initial reception of requested SI, a VT is requested SIBs 1, 9 and 13. Shortly after that a timer expires 50ms after the confirmation of validity for SIBs 2, 3 and 4; so the VT above is requested together with a VT for SIBs 2, 3 and 4. Again the transmission of the request is delayed and only actually performed in case the VT is not already received. The VT sent by the base station may in this example indicate version 87 of SIBs 1, 9 and 13 to be still valid (as stored in the UE) but SIBs 2, 3 and 4 now need an update to version 46.

The UE waits a random time again before issuing a request for SIB 2, 3 and 4 if they have not been received before. The base station replies the request by sending the respective SI with new version and timer.

The description above is only an example. The base station can send more or less than the requested SIBs and the UE may request the VT for more or less than the SIBs whose timer expired. Also, a VT may be transmitted together with actual SIB data containing version information for SIBs not contained in the transmission. The VT and SI may be send in a dedicated fashion so that the likelihood of receiving information from the base station without having issued a request is very low. The VT and SI may also be sent regularly via broadcast without requests by any UEs so that the need to send requests only rarely becomes true. Furthermore, the granularity of the validity time is only exemplary; a finer or coarser granularity is also thinkable (e.g., depending on the meaning or content of the various SIBs). It may also be beneficial to harmonize the validity time of a given SIB (for example: SIB X) and/or the corresponding maximum waiting time T_{W} with the validity time of other SIBs (for example: SIB Y) in such a way that T_{SIBx} + T_{W} = T_{SIBy}.

In a second exemplary embodiment, the third aspect of the invention described above is implemented.

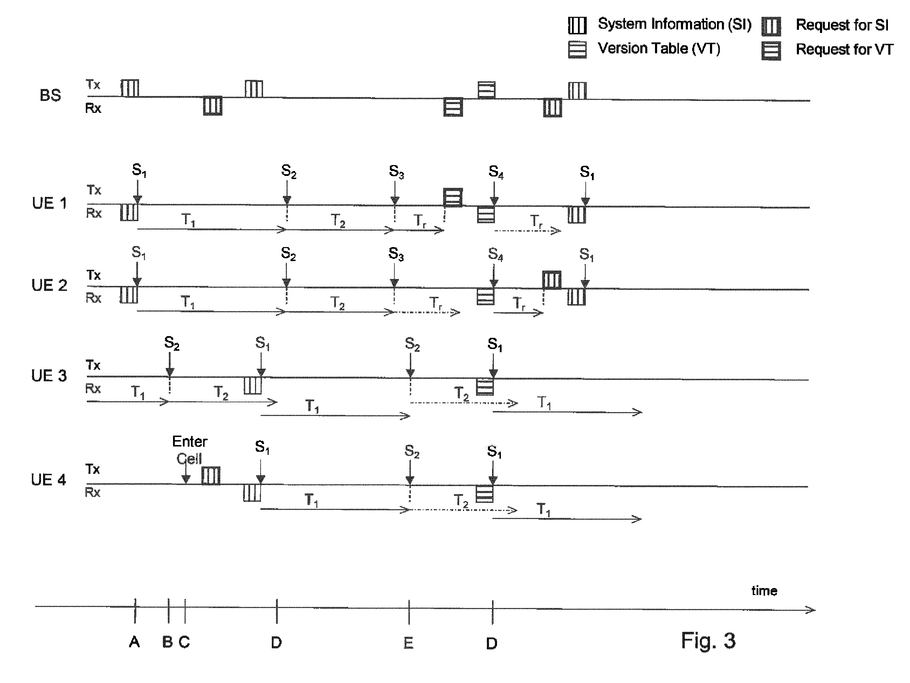

Fig. 3 shows transmission and reception of various pieces of information for a base station (BS) and 4 different UEs (UE1 - UE4) in a specific scenario that is described in the following. The messages transmitted are "System Information (SI)", "Version Table (VT)", "Request for SI" and "Request for VT". In the figure for the BS and each UE a horizontal time line is shown as an arrow. On top the arrow, potential transmission of signals by the respective entity is depicted as a box. Below the arrow, potential reception of signals is depicted. Vertically striped boxes represent SI (light frame) and requests for SI (bold frame), horizontally striped boxes represent VT (light frame) and requests for VT (bold frame).

A general time axis is depicted at the bottom of Fig. 3 with various points in time labelled "A", "B", "C", ..."E" to ease the following description. The following description considers one SIB and should be read to include any number of SIBs, groups of SIBs or all SIBs of a cell or system.

UE 1, 2 and 3 may be present in the cell at the beginning of the time line described in Fig. 3. At an arbitrary point in time "A" the base station may transmit a SIB that is received by UE1 and UE2. UE3 at that time does not receive SI. UE₁ and UE₂ change their state to S₁ and stop receiving the SIB for T₁, a time derived from the SIB's general validity time.

At a point "B" UE3 changes its state from S₁ to S₂ and starts to listen to potential SI and VT transmissions. At a point "C" UE4 enters the cell and immediately sends a request for SI. The BS receives the request and broadcasts the requested SI. UE1 and UE2 do not receive the SI. UE3 and UE4 receive the SI, store it and change state to S₁.

At a point "D" UE1 and UE2 change state to S₂ and listen to potential SI transmissions. A time period T₂ later UE1 and UE2 change to state S₃. Each of UE1 and UE2 are prepared to transmit to the BS a request for transmission of VT. The transmission is randomly delayed shown in the figure by an arrow marked Tᵣ with varying length. At some point during the random delay ("E") UE3 and UE4 change state to S₂ and start listening to SI delivery.

After Tᵣ for UE1 is over, it transmits a request for VT which is received by the BS and responded with transmission of the VT received by UE1, UE2, UE3 and UE4 at point "D". The arrow depicting Tᵣ of UE2 is shown in dashed lines because that random delay causes UE2 not to transmit a request at all. It is assumed in this example that the validity of SI of UE3 and UE4 is re-confirmed so that these UEs can fall back to S₁, stop their respective timer T₂ and stop listening to SI.

UE1 and UE2 have received information about to-be-updated SI, change state to S₄ and again delay randomly the transmission of a request for SI delivery. The request is transmitted by UE2, received by the BS and responded with transmission of the SI by UE1 and UE2. As a result, UE1 does not transmit a request for SI at all.

It may be seen from this example that the described method allows reliable delivery of SI on-demand with an efficient mechanism for requesting VT and SI information.

The timelines for UE1 through UE4 are shown to be exactly synchronized between some UEs which is not necessarily the case. The example should be understood to be simplified in this regard to ease the understanding of the figure.

In a third exemplary embodiment, the fifth aspect of the invention described above is implemented.

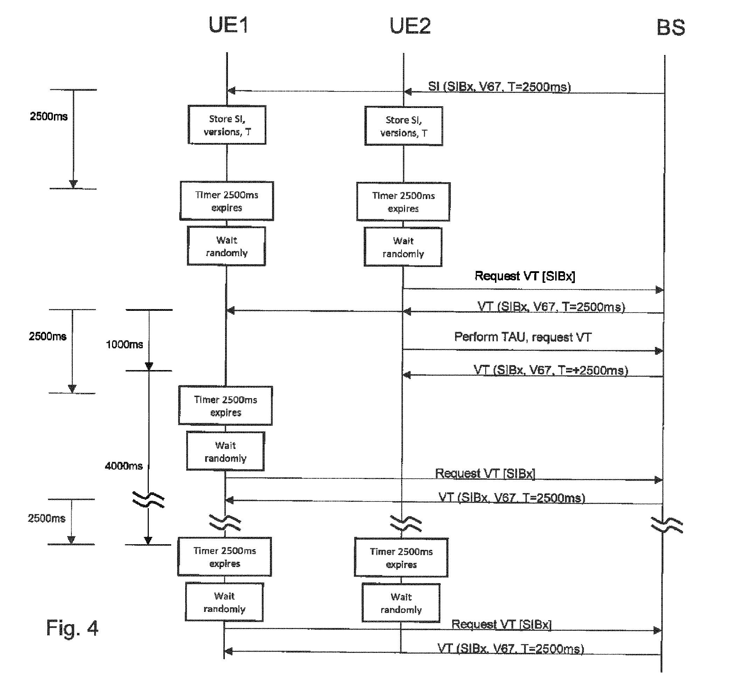

Fig. 4 depicts an example of two UEs having stored the same SI denoted SIBx to indicate that this is just an arbitrary example applicable to all SIBs and combinations of SIBs. The delivery of SIBx was performed in broadcast mode with a validity timer of 2500ms. UE1 and UE2 receive the SIB essentially simultaneously, thus both UE timers expire at the same time. According to one aspect of the present invention, after expiry of the respective timer, due to random delay, only one of the UEs transmits a requests for a VT, the VT returned by the BS is again received by both UEs. In the example no version change has happened and so no update is necessary.

Now, UE2 has to perform a Tracking Area Update procedure and it uses the connection to request an early VT update for its SI just to utilize the already established connection efficiently. The base station returns a VT indicating no update is necessary. If the VT would contain again the fixed validity timer of 2500ms, UE2 and UE1 would be out of sync and the advantage of performing synchronized VT and SI requests would diminish. Now the base station can apply (and/or instruct the UEs to apply) various counter measures. First, the running count down in the UEs could continue (no reset) which would keep the UEs in sync but obsolete the VT transmission during the TAU procedure. Another option is for the base station to ask UE2 to inform the base station about the time value left for in its timer, so that the network can send an adapted validity time value that ensures the UE is in sync with other UEs to take advantage of the current invention.

Alternatively, an option depicted in Fig. 4 can be used in which UE2 adds the received validity time (2500ms) to the present time value in its timer (2500ms - 1000ms = 1500ms) with the same result of skipping the next VT update. This is shown in Fig. 4 when UE2 sends a VT request within its TAU procedure. The base station replies with the normal validity timer indicating that the timer should be added to the running timer ("+2500ms") which results in a 4000ms validity of the SIB (for UE2).

In a fourth embodiment, an alternative to the first embodiment is provided.

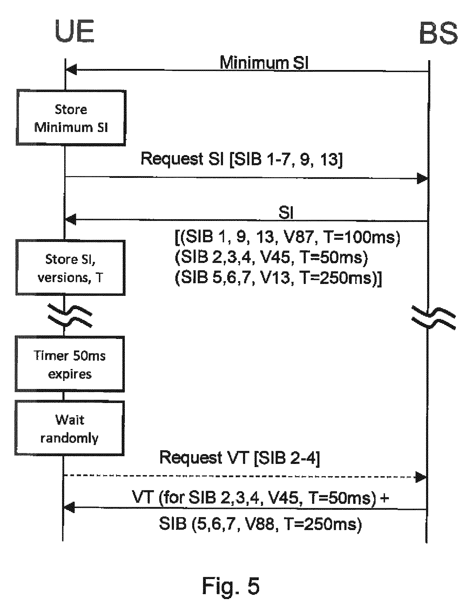

Fig. 5 shows a variation to the message sequence chart of Fig. 2, depicting a message sequence chart with a UE entering a cell, receiving minimum SI and some specific SIBs. After expiry of the validity timer of SIBs 2, 3 and 4 the UE requests a VT from the base station and is provided with the VT in return. But now, the base station provides in addition to the version indicating no update is needed for SIB 2, 3 and 4 also directly the SIB 5, 6 and 7 with a new version V88. As we can see in this example, the base station can use its flexibility to efficiently deliver SI on-demand.

In a fifth embodiment, the sixth aspect of the invention described above is implemented.

Fig. 6 shows an example for a SI block (SIBx) containing information that configures the SIB delivery information of a cell. The SIB delivery information may inform the UEs entering the cell about whether or not a VT is used, i.e. whether the base station expects a two-step SIB delivery approach first providing VT and based on that information providing SIBs. If VTs are not used, UEs will directly request SIBs, potentially indicating a stored version to allow the base station to answer with a simple "no update".

A shown, Fig. 6 includes a boolean flag "VT" in SIBx having the values Yes or No. If Yes (VT are used in the cell), SIBx may specify for which SIB (in the example 1 to 9) the VT usage applies. This allows the network to differentiate e.g. very small SIBs or those that need quick delivery and that benefit from a one-step SIB delivery; and bigger or more delay tolerant SIBs that benefit from a two-set approach.

The timer values for T₁ and T₂ may also be indicated in the SIB. The timers could be given in absolute numbers, which would require quite some signalling effort as for different SIBs different timers are likely to apply. A better alternative is a relative configuration in which T₁ (the time after which a UE listens to receive VT and SIB transmissions from the base station) and T₂ (the time after which the UE starts to transmit VT or SIB requests to the base station) are defined relative to the validity timer of the respective SIB. As an example, T₁ could be 80% of the validity timer and T₂ 10%, so that for a SIB with expiry timer 1000ms the UE would start listening in order to receive VT and SIB after 800ms and would start transmitting VT requests 900ms after the last SIB update.

As an alternative approach to the above, the version information or validity table for the system information in a cell is broadcasted by the base station, i.e. the VT is not delivered on-demand but periodically. The UEs read the VT from using a schedule provided in the broadcast as well, very similar to legacy SI delivery.

In that approach, the actual system information is provided on-demand based on requests sent by UEs as described above. The UE-based triggering of such requests is a result of VT reception via broadcast and detecting that any one or more SIBs stored in the UE need an update.

This approach combines legacy broadcast mechanisms with new on-demand delivery mechanisms. But, as a benefit over prior-art the periodic broadcast is only used for a very limited amount of data (VT) whereas on-demand delivery ensures more efficient transport of actual SI. As this approach is a combination of known mechanisms and the techniques described above, no specific embodiment (and figure) is shown but will be readily understood.

## Claims

1. A method of providing on-demand system information to a user equipment device, UE, in a mobile communications network, the system information being transmitted by a base station by means of system information units, the method comprising:
the base station transmitting validity information indicating which system information units are currently valid;
the UE transmitting to a base station a message indicating based on the validity information which system information units are required by the UE; and
the base station transmitting the required system information units to the UE.

2. The method according to claim 1, wherein each transmitted system information unit is assigned a version number, the validity information indicating the version number of currently valid system information units.

3. The method according to claim 1 or claim 2, wherein the validity information is transmitted as a broadcast.

4. The method according to any one of the preceding claims, wherein the base station transmits the validity information in response to a request from the UE or from a further UE.

5. The method according to any preceding claim, wherein the system information units are transmitted by broadcasting.

6. The method according to any preceding claim wherein the UE sends a request to the base station for a transmission of the validity information after one of a cell reselection, a handover completion, a transfer from another radio access technology to that of the base station and coming from an out of coverage situation.

7. The method according to any preceding claim, wherein the UE stores an indicator of an expiry time of a received system information unit.

8. The method according to claim 7, wherein the UE sends a request to the base station for the base station to send the validity information when the expiry time has passed.

9. The method according to claim 8, wherein the UE waits a random amount of time after the expiry time has passed before sending the request to the base station.

10. The method according to any preceding claim, wherein the base station sends the validity information in response to a request from the UE, the request including information about a version number of a system information unit stored by the UE.

11. The method according to any preceding claim, wherein the UE sends a request to the base station for the transmission of validity information, the request including an identification of the UE, and wherein the validity information transmitted by the base station contains only validity information relating to system information units relevant for capabilities of the UE known to the base station.

12. The method according to any preceding claim, wherein the base station transmits an indicator in a system information unit that it is configured to transmit the validity information.

13. A user equipment device, UE, arranged to transmit information to and receive information from a mobile communications base station, wherein the UE is adapted:
to store system information units transmitted by the base station,
to transmit to the base station a request for the base station to transmit version information indicating which versions of system information units are currently valid; and
based on the version information to transmit a request to the base station that particular system information units be transmitted by the base station.

14. The UE according to claim 13, wherein the UE is adapted to receive the version information from the base station and if after a predetermined time no new version information is received from the base station to transmit a request for the version information to the base station.

15. The UE according to claim 13, wherein the UE is arranged to store a validity time for the system information units received from the base station and to send the request for version information if within the validity time an updated system information unit has not been received.
